# EUROPEAN PATENT APPLICATION

(11) **EP 4 835 990 A1**
(43) Date of publication of application: **04.11.2026**
(21) Application number: 24776813.8
(22) Date of filing: 22.08.2024
(51) Int. Cl.: H01M 4/36, H01M 4/58, H01M 4/62, C01B 25/455, C01B 32/05, H01M 4/04, H01M 4/136, H01M 10/054, C01B 25/45

(54) **CARBON-COATED SODIUM VANADIUM FLUOROPHOSPHATE POSITIVE ELECTRODE MATERIAL AND PREPARATION METHOD THEREFOR, POSITIVE ELECTRODE SHEET, AND SECONDARY BATTERY**

(30) Priority: 19.08.2024 CN 202411139879
(71) Applicant: Hubei Wanrun New Energy Technology Co., Ltd., Shiyan, Hubei 442500 (CN)
(72) Inventor: LV, Fei, Shiyan, Hubei 442500 (CN); WANG, Huanwen, Shiyan, Hubei 442500 (CN); ZHENG, Zhi, Shiyan, Hubei 442500 (CN); ZHANG, Taoqiu, Shiyan, Hubei 442500 (CN); PENG, Tangping, Shiyan, Hubei 442500 (CN)
(74) Representative: Studio Torta S.p.A.
(86) International application number: PCT/CN2024/114002
(87) International publication number: WO 2026/040053

(57) **Abstract**

The present disclosure provides carbon-coated sodium vanadium fluorophosphate cathode material and preparation method thereof, cathode sheet, and secondary battery, belonging to the field of secondary battery technology, wherein the carbon-coated sodium vanadium fluorophosphate cathode material comprises a core layer and a shell layer, the core layer material comprises sodium vanadium fluorophosphate, the shell layer material comprises carbon, the mass fraction of carbon element in the carbon-coated sodium vanadium fluorophosphate cathode material is 1.8%-3%, the D50 particle size is 3 µm-10 µm, and the compacted density is 1.8 g/cm³-2.1 g/cm³. The carbon-coated sodium vanadium fluorophosphate cathode material provided in the present disclosure has improved performance in electronic conductivity and other aspects. The sodium ion battery prepared with the carbon-coated sodium vanadium fluorophosphate cathode material in the present disclosure has good electrochemical performance such as rate performance.

## Description

The present application claims priority to the Chinese patent application with application number 202411139879.8, submitted to the Patent Office of the People's Republic of China on August 19, 2024. The entire contents of the above-mentioned application are incorporated herein by reference.

### Technical Field

The present disclosure relates to the field of secondary battery technology, specifically to sodium vanadium fluorophosphate cathode material and preparation method thereof, cathode sheet, and secondary battery.

### Background

Sodium ion batteries (SIBs), due to their similar working principle to mainstream lithium-ion batteries (LIBs), abundant sodium ion resources in the earth's crust and their low cost, have become the most likely alternative to lithium-ion batteries in grid scale energy storage. However, materials for the SIB electrode still face some challenges, such as insurmountable structural instability, slow ion diffusion, low operating voltage, and low energy/power density. To address these issues, scientists studying SIB are primarily dedicated to designing and preparing novel electrode materials with high adaptability and reversibility in sodium ion intercalation/extraction processes. Transition metal oxides (TMOs) and polyanionic compounds (PACs) are the two most promising candidate materials for SIB cathode materials. Compared to TMO, PAC typically has a longer cycle life due to the higher structural stability of the multi-anionic framework. One of the main potential application areas of SIB is grid level energy storage, which requires ultra long cycle life as one of the most basic requirements. Therefore, it can be inferred that if the comprehensive electrochemical performance of PAC, such as rate performance, specific capacity, and operating voltage, is improved, its prospects in the field of SIB applications will be very broad.

Sodium superionic conductor (NASICON) is one of the representative PAC materials, which contains a stable three-dimensional (3D) open framework composed of P-O tetrahedra and M-O octahedra (M represents transition metal), enabling rapid migration of Na⁺. The energy density provided by NASICON is significantly lower than the theoretical value of phosphate-based cathode materials in LIB. Therefore, a major challenge faced by NASICON is to increase energy density in order to narrow the gap between current values and practical applications. In order to achieve higher energy density for NASICON, increasing the operating voltage is easier than increasing the capacity. Compared to NASICON without fluorine, NASICON incorporated with F typically has a higher operating voltage. For example, a typical NASICON Na₃V₂(PO₄)₂F₃ (NVPF) can provide an average operating voltage of up to 3.95 V, with a theoretical capacity of 128 mAh·g⁻¹ and a corresponding theoretical energy density of up to 507 Wh·kg⁻¹. However, as a member of the NASICON family, NVPF also inherits the defect of low electronic conductivity, which limits the rate performance of the battery and has a certain impact on power density, hindering its application.

### Summary

In view of the technical problems existing in the background technology, the present disclosure provides carbon-coated sodium vanadium fluorophosphate cathode material and preparation method thereof, cathode sheet, and secondary battery, aiming to solve the problem of poor electronic conductivity of a sodium vanadium fluorophosphate cathode material.

In a first aspect, an embodiment of the present disclosure provides a carbon-coated sodium vanadium fluorophosphate cathode material comprising a core layer and a shell layer, wherein, the core layer material comprises sodium vanadium fluorophosphate, the shell layer material comprises carbon, the mass fraction of carbon element in the carbon-coated sodium vanadium fluorophosphate cathode material is 1.8%-3%, the D50 particle size is 3 µm-10 µm, and the compacted density is 1.8 g/cm³-2.1 g/cm³.

In the technical solution of an embodiment of the present disclosure, the electronic conductivity of the cathode material can be improved by carbon-coated sodium vanadium fluorophosphate; and in addition, controlling the mass fraction and D50 particle size of carbon element can facilitate the migration of sodium ions and improve the specific charge capacity and the specific discharge capacity of a battery.

In some embodiments, the mass fraction of the carbon element in the carbon-coated sodium vanadium fluorophosphate cathode material is 2.4%-2.8%.

In these embodiments, by further controlling the mass fraction of the carbon element, the specific charge capacity and the specific discharge capacity of the battery can be further improved.

In some embodiments, the BET specific surface area of the carbon-coated sodium vanadium fluorophosphate cathode material is 14 m²/g-18.5 m²/g.

In these embodiments, the BET specific surface area of the carbon-coated sodium vanadium fluorophosphate cathode material is controlled to increase the contact area between the cathode material and the electrolyte, thereby improving the rate of sodium ion deintercalation in the cathode material.

In some embodiments, the chemical formula of sodium vanadium fluorophosphate is Na₃V₂(PO₄)₂F₃.

In these embodiments, by controlling the type of sodium vanadium fluorophosphate, the cycling performance of carbon-coated sodium vanadium fluorophosphate cathode material can be improved.

In a second aspect, an embodiment of the present disclosure provides a preparation method of the carbon-coated sodium vanadium fluorophosphate cathode material, comprising the following steps:
Preparing a carbon-coated sodium vanadium fluorophosphate precursor using a vanadium phosphate crystal, a fluorine source, a sodium source, and a carbon source;
Calcining the carbon-coated sodium vanadium fluorophosphate precursor to obtain the carbon-coated sodium vanadium fluorophosphate cathode material;
Wherein, the carbon-coated sodium vanadium fluorophosphate cathode material comprises a core layer and a shell layer, the core layer material comprises sodium vanadium fluorophosphate, the shell layer material comprises carbon, the mass fraction of carbon element in the carbon-coated sodium vanadium fluorophosphate cathode material is 1.8%-3%, the D50 particle size is 3 µm-10 µm, and the compacted density is 1.8 g/cm³-2.1 g/cm³.

In the technical solution of an embodiment of the present disclosure, by first preparing a vanadium phosphate crystal, and then using fluorine, sodium, and carbon sources to prepare carbon-coated sodium vanadium fluorophosphate, a cathode material with a compacted density of 1.8 g/cm³-2.1 g/cm³ can be prepared, which comprises a shell layer of carbon and a core layer of sodium vanadium fluorophosphate cathode material.

In some embodiments, the crystal form of the vanadium phosphate crystal is orthogonal crystal form.

In these embodiments, the vanadium phosphate in the orthogonal crystal form has high ion conductivity, which can effectively improve the performance and cycle life of the battery.

In some embodiments, a preparation method of the vanadium phosphate crystal comprises the following steps:
Mixing a vanadium source, a reducing agent, water, and a phosphorus source, and conducting a reaction by heating to obtain a mixed material;
Drying the mixed material to obtain a vanadium phosphate precursor;
Calcining the vanadium phosphate precursor to obtain the vanadium phosphate crystal.

In these embodiments, a vanadium phosphate crystal with high purity can be obtained by calcination.

In some embodiments, a molar ratio of vanadium phosphate, fluorine element, sodium element, and carbon element in the above-mentioned vanadium phosphate crystal, fluorine source, sodium source, and carbon source is 1: (1.4-1.6): (1.4-1.6): (0.55-0.65).

In these embodiments, controlling the proportion of each ingredient as described above helps to prepare a carbon-coated sodium vanadium fluorophosphate cathode material with a complete crystal structure of sodium vanadium phosphate.

In some embodiments, the specific preparation method of a carbon-coated sodium vanadium fluorophosphate precursor is: mixing a vanadium phosphate crystal, a fluorine source, a sodium source, and a carbon source, adding ethanol, and performing ball milling for 5 h-24 h to obtain a carbon-coated sodium vanadium fluorophosphate precursor.

In these embodiments, ball milling can make the material mix more evenly, and the ingredient of the resulting cathode material is also more uniform.

In some embodiments, a temperature for calcining the carbon-coated sodium vanadium fluorophosphate precursor is 600 °C-800 °C, and a calcination time is 0.5 h-5 h.

In these embodiments, controlling the calcination conditions as described above helps to produce a structurally intact carbon-coated sodium vanadium fluorophosphate cathode material, which is beneficial for improving the cycle life of the carbon-coated sodium vanadium fluorophosphate cathode material.

In some embodiments, the carbon source is at least one of glucose, PEG-2000, and sucrose.

In these embodiments, using the above-mentioned materials as a carbon source can form a shell with good conductivity.

In a third aspect, an embodiment of the present disclosure provides a cathode sheet comprising a current collector and a cathode active material, a conductive agent, and a binder located on one side or both sides of the current collector; wherein, the cathode active material is the carbon-coated sodium vanadium fluorophosphate cathode material of the first aspect of the present disclosure or the sodium vanadium fluorophosphate cathode material prepared by the preparation method of the second aspect of the present disclosure.

In these embodiments, the cathode sheet comprises the above-mentioned carbon-coated sodium vanadium fluorophosphate cathode material, thus having the advantages of high energy density and good rate performance.

In a fourth aspect, an embodiment of the present disclosure provides a secondary battery comprising the cathode sheet of the third aspect of the present disclosure.

In these embodiments, the secondary battery comprises the above-mentioned cathode sheet, thus having the advantages of high power density and good comprehensive electrochemical performance.

The foregoing description is merely an overview of the technical solution of the present disclosure. For a better understanding of the technical means in the present disclosure such that they can be implemented according to the content of the description, and to make the above and other objectives, features and advantages of the present disclosure more obvious and easier to understand, the following describes specific embodiments of the present disclosure.

### Brief Description of the Drawings

To describe the technical solution of the present disclosure more clearly, the following briefly describes the accompanying drawings used in the present disclosure. Apparently, the accompanying drawings in the following descriptions show merely some embodiments of the present disclosure, and those of ordinary skill in the art may still derive other drawings from the accompanying drawings without creative efforts.
FIG. 1 is an XRD pattern diagram of a vanadium phosphate crystal in Embodiment 1;
FIG. 2 is a scanning electron microscope image of a carbon-coated sodium vanadium fluorophosphate cathode material in Embodiment 1;
FIG. 3 is an XRD pattern diagram of a carbon-coated sodium vanadium fluorophosphate cathode material in Embodiment 1;
FIG. 4 is a cycling performance test diagram of a secondary battery using a carbon-coated sodium vanadium fluorophosphate cathode material as a cathode active material in Embodiment 1;
FIG. 5 is a rate performance test diagram of a secondary battery using a carbon-coated sodium vanadium fluorophosphate cathode material as a cathode active material in Embodiment 1;
FIG. 6 is a rate performance test diagram of a secondary battery using sodium vanadium fluorophosphate cathode material as a cathode active material in Comparative Embodiment 2.

### Detailed Description of the Embodiments

Embodiments of the technical solutions of the present disclosure will be described in detail below in conjunction with the drawings. The following embodiments are only used to more clearly illustrate the technical solution of the present disclosure, and therefore are only used as embodiments and cannot be used to limit the scope of protection of the present disclosure.

Unless otherwise defined, all technical and scientific terms used herein have the same meaning as commonly understood by those skilled in the art belonging to the technical field of the present disclosure; the terms used herein are intended only for the purpose of describing specific embodiments and are not intended to limit the present disclosure; and the terms "including" and "having" and any variations thereof in the specification and the claims of the present disclosure and in the description of drawings above are intended to cover non-exclusive inclusion.

In the description of the embodiments of the present disclosure, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present disclosure, the meaning of "a plurality of" is two or more, unless otherwise explicitly and specifically defined.

Reference herein to "an embodiment" means that a particular feature, structure, or characteristic described in connection with the embodiment can be included in at least one embodiment of the present disclosure. The appearance of this phrase in various places in the description does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present disclosure, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present disclosure, the term "a plurality of" refers to two or more (including two), and similarly, "multiple groups" refers to two or more (including two) groups, and "multiple sheets" refers to two or more (including two) sheets.

In the description of the embodiments of the present disclosure, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present disclosure and simplify the description only, rather than indicating or implying that the apparatus or element referred to must have a particular orientation or be constructed and operated in a particular orientation, and therefore are not to be interpreted as limitations on the embodiments of the present disclosure.

In the description of the embodiments of the present disclosure, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present disclosure can be understood according to specific situations.

Due to the low cost of sodium sources, a sodium ion battery is considered to replace a lithium ion battery as the new generation of a secondary battery. However, the radius of sodium ions is larger than that of lithium ions, resulting in a slower diffusion rate. Additionally, the electronic conductivity of the cathode material of a sodium ion battery is poor, leading to a lower power density and making it difficult to apply on a large scale.

In order to solve the technical problems of poor electronic conductivity and low power density of the cathode material of a sodium ion battery, the present disclosure provides a carbon-coated sodium vanadium fluorophosphate cathode material and a preparation method thereof, a cathode sheet, and a secondary battery, wherein by coating a carbon shell layer on the surface of the sodium vanadium fluorophosphate core layer, the electronic conductivity of the cathode material can be improved, thereby increasing its power density; in addition, controlling the D50 particle size and compacted density of the carbon-coated sodium vanadium fluorophosphate cathode material can help improve its energy density, enhance the comprehensive electrochemical performance of the cathode material, and thus improve the electrochemical performance of the cathode sheet and secondary battery.

In a first aspect, an embodiment of the present disclosure provide a carbon-coated sodium vanadium fluorophosphate cathode material comprising a core layer and a shell layer, wherein, the core layer material comprises sodium vanadium fluorophosphate, the shell layer material comprises carbon, the mass fraction of carbon element in the carbon-coated sodium vanadium fluorophosphate cathode material is 1.8%-3%, which can specifically be 1.8%, 2%, 2.4%, 2.5%, 2.8%, 3%, 3.5%, etc., or other values within the above-mentioned range, and is not limited here; the D50 particle size is 3 µm-10 µm, which can specifically be 4 µm, 4.5 µm, 5 µm, 5.5 µm, 6 µm, 10 µm, etc., or other values within the above-mentioned range, and is not limited here; and the compacted density is 1.8 g/cm³-2.1 g/cm³, which can specifically be 1.85 g/cm³, 1.9 g/cm³, 1.95 g/cm³, 2 g/cm³, 2.05 g/cm³, 2.06 g/cm³, 2.1 g/cm³, etc., or other values within the above-mentioned range, and is not limited here.

In the description of the present disclosure, the term "D50 particle size" refers to the particle distribution where 50% of the particles have a diameter less than or equal to this value, and the D50 particle size is measured using a laser particle size analyzer.

In the description of the present disclosure, the term "compacted density" refers to the density of the material tested by a compaction density meter after compaction under a pressure of 3.0 T.

The conductivity of a carbon material is relatively high. By coating a suitable thickness of carbon shell layer on the surface of the sodium vanadium fluorophosphate core layer, the electronic conductivity of the sodium vanadium fluorophosphate cathode material can be effectively improved. In addition, controlling the D50 particle size and compacted density of the carbon-coated sodium vanadium fluorophosphate cathode material can help to increase the contact area between particles, further improve its specific charge capacity and specific discharge capacity, and enhance power density.

Furthermore, in some embodiments, the mass fraction of the carbon element in the carbon-coated sodium vanadium fluorophosphate cathode material is 2.4%-2.8%, which can specifically be 2.4%, 2.5%, 2.6%, 2.7%, 2.8%, etc., or other values within this range, and is not limited here.

In the technical solution of an embodiment of the present disclosure, further optimization of the carbon element content can help improve the conductivity of the cathode material and make it easier for sodium ions to be deintercalated in the cathode material.

Furthermore, in some embodiments, the BET specific surface area of the carbon-coated sodium vanadium fluorophosphate cathode material is 9 m²/g-22 m²/g. The preferred BET specific surface area of the carbon-coated sodium vanadium fluorophosphate cathode material is 14 m²/g-18.5 m²/g, which can specifically be 14 m²/g, 14.5 m²/g, 15 m²/g, 16 m²/g, 17 m²/g, 18.5 m²/g, etc., or other values within this range, and is not limited here.

In the technical solution of embodiments of the present disclosure, controlling the BET specific surface area helps to control the contact area between the cathode material and the electrolyte, thereby improving the ion diffusion rate and increasing the power density of the cathode material.

Furthermore, in some embodiments, the chemical formula of sodium vanadium fluorophosphate is Na₃V₂(PO₄)₂F₃.

In the technical solution of an embodiment of the present disclosure, Na₃V₂(PO₄)₂F₃ is selected because the carbon-coated sodium vanadium fluorophosphate cathode material prepared from it has higher specific charge capacity and specific discharge capacity and cycling stability, and higher safety.

In a second aspect, an embodiment of the present disclosure provides a preparation method of the carbon-coated sodium vanadium fluorophosphate cathode material, comprising the following steps:
Preparing a carbon-coated sodium vanadium fluorophosphate precursor using a vanadium phosphate crystal, a fluorine source, a sodium source, and a carbon source;
Calcining the carbon-coated sodium vanadium fluorophosphate precursor to obtain the carbon-coated sodium vanadium fluorophosphate cathode material;
Wherein, the carbon-coated sodium vanadium fluorophosphate cathode material comprises a core layer and a shell layer, the core layer material comprises sodium vanadium fluorophosphate, the shell layer material comprises carbon, the mass fraction of carbon element in carbon-coated sodium vanadium fluorophosphate cathode material is 1.8%-3%, the D50 particle size is 3 µm-10 µm, and the compacted density is 1.8 g/cm³-2.1 g/cm³.

In the technical solution of an embodiment of the present disclosure, a method of preparing a vanadium phosphate crystal first and then preparing a carbon-coated sodium vanadium fluorophosphate cathode material can significantly improve the specific charge capacity and specific discharge capacity of the obtained carbon-coated sodium vanadium fluorophosphate cathode material, with small polarization of the charge curve and discharge curve and high power density; and it is easier to control the content of a carbon element in the obtained carbon-coated sodium vanadium fluorophosphate cathode material and the size of the obtained carbon-coated sodium vanadium fluorophosphate; in addition, mixing the vanadium phosphate crystal with fluorine source, sodium source, and carbon source to prepare a carbon-coated sodium vanadium fluorophosphate precursor can produce a carbon-coated sodium vanadium fluorophosphate cathode material with a compacted density of 1.8 g/cm³-2.1 g/cm³, which is beneficial for improving the energy density of the carbon-coated sodium vanadium fluorophosphate cathode material.

In some embodiments, the preparation method of the carbon-coated sodium vanadium fluorophosphate cathode material is used to prepare the carbon-coated sodium vanadium fluorophosphate cathode material as previously described.

Furthermore, in some embodiments, the crystal form of the vanadium phosphate crystal is orthogonal crystal form.

In the technical solution of an embodiment of the present disclosure, a carbon-coated sodium vanadium fluorophosphate cathode material is prepared by selecting a vanadium phosphate crystal in the orthogonal crystal form, which has higher specific charge capacity and specific discharge capacity and cycle life.

Furthermore, in some embodiments, a preparation method of the vanadium phosphate crystal comprises the following steps:
Mixing a vanadium source, a reducing agent, water, and a phosphorus source, and conducting a reaction by heating to obtain a mixed material;
Drying the mixed material to obtain a vanadium phosphate precursor;
Calcining the vanadium phosphate precursor to obtain a vanadium phosphate crystal.

In the technical solution of an embodiment of the present disclosure, a vanadium phosphate crystal with high purity can be prepared by calcination, which can be applied on a large scale in industry.

Furthermore, in some embodiments, a above-mentioned drying treatment method is steam drying at a temperature of 80 °C-160 °C, for example, it can be 90 °C, 100 °C, 110 °C, 120 °C, 130 °C, 140 °C, 150 °C, or other values within this range, and is not limited here; and a time range is 5 h-24 h, for example, it can be 6 h, 8 h, 10 h, 12 h, 13 h, 15 h, 16 h, 18 h, 20 h, or other values within this range, and is not limited here.

The above-mentioned drying method is simple, fast, and does not require the use of special equipment, making it suitable for industrial applications.

Furthermore, in some embodiments, a calcination temperature of the above-mentioned vanadium phosphate precursor is 700 °C-800 °C, and a calcination time is 6 h-10 h.

In some embodiments, the calcination temperature of the vanadium phosphate precursor can be 710 °C, 720 °C, 730 °C, 750 °C, 760 °C, 780 °C, 790 °C, or other values within this range, and is not limited here.

In some embodiments, the calcination time of the vanadium phosphate precursor can be 6.5 h, 7 h, 7.5 h, 8 h, 8.5 h, 9 h, 9.5 h, or other values within this range, and is not limited here.

In the technical solution of an embodiment of the present disclosure, controlling the calcination conditions of the vanadium phosphate precursor helps to prepare a vanadium phosphate crystal in the orthogonal crystal form with high purity.

Furthermore, in some embodiments, a vanadium source comprises one or both of vanadium pentoxide and ammonium metavanadate; a reducing agent comprises one or two of oxalic acid and citric acid; a phosphorus source comprises one or more of ammonium dihydrogen phosphate, diammonium dihydrogen phosphate, and phosphoric acid; and water comprises deionized water, distilled water, pure water, etc., and is not limited here.

In the technical solution of an embodiment of the present disclosure, common and readily available materials are selected for both the vanadium source and the reducing agent, and the vanadium source, reducing agent, and phosphorus source mentioned above are prone to react to a generate vanadium phosphate precursor.

In the technical solution of an embodiment of the present disclosure, a molar ratio of vanadium element to acid in the vanadium source is 1: (1-10), for example, the molar ratio of vanadium element to acid in the vanadium source can be 1:2, 1:3, 1:5, 1:6, 1:7, 1:8, 1:9, or other values within this range, and is not limited here; and a molar ratio of vanadium element in the vanadium source to phosphorus element in the phosphorus source is 1: (0.8-1.2), for example, the molar ratio of vanadium element in the vanadium source to phosphorus element in the phosphorus source can be 1:0.85, 1:0.9, 1:0.95, 1:1, 1:1.2, 1:1.15, 1:1.18, or other values within this range, and is not limited here.

Preparing the vanadium phosphate precursor under the above-mentioned conditions will not cause waste of raw materials.

Furthermore, in some embodiments, a molar ratio of vanadium phosphate crystal, fluorine element, sodium element, and carbon element in the above-mentioned vanadium phosphate crystal, fluorine source, sodium source, and carbon source is 1: (1.4-1.6): (1.4-1.6): (0.55-0.65). For example, the molar ratio of vanadium phosphate crystal, fluorine element, sodium element, and carbon element in the above-mentioned vanadium phosphate crystal, fluorine source, sodium source, and carbon source can be 1:1.4:1.4:0.55, 1:1.4:1.4:0.6, 1:1.4:1.4:0.65, 1:1.5:1.5:0.55, 1:1.5:1.5:0.6, 1:1.5:1.5:0.65, 1:1.6:1.6:0.55, 1:1.6:1.6:0.6, 1:1.6:1.6:0.65, or other values within this range, and is not limited here.

In the technical solution of an embodiment of the present disclosure, controlling a molar ratio of vanadium phosphate, fluorine element, sodium element, and carbon element is helpful in preparing a sodium vanadium fluorophosphate core layer material with the chemical formula Na₃V₂(PO₄)₂F₃.

Furthermore, in some embodiments, the specific preparation method of a carbon-coated sodium vanadium fluorophosphate precursor is: mixing a vanadium phosphate crystal, a fluorine source, a sodium source, and a carbon source, adding ethanol, and performing ball milling for 5 h-24 h to obtain a carbon-coated sodium vanadium fluorophosphate precursor.

In some embodiments, the ball milling time can be 6 h, 8 h, 10 h, 12 h, 15 h, 17 h, 20 h, 22 h, or other values within this range, and is not limited here.

In the technical solution of an embodiment of the present disclosure, adopting the above-mentioned method can improve the uniformity of the ingredient of the carbon-coated sodium vanadium fluorophosphate precursor.

Furthermore, in some embodiments, a temperature for calcining the carbon-coated sodium vanadium fluorophosphate precursor is 600 °C-800 °C, and a calcination time is 0.5 h-5 h.

In some embodiments, the temperature for calcining the carbon-coated sodium vanadium fluorophosphate precursor can be 650 °C, 680 °C, 700 °C, 720 °C, 750 °C, 780 °C, or other values within this range, and is not limited here; and the time for calcining the carbon-coated sodium vanadium fluorophosphate precursor can be 0.6 h, 0.8 h, 1 h, 1.5 h, 2 h, 2.5 h, 3 h, 3.5 h, 4 h, 4.5 h, or other values within this range, and is not limited here.

In the technical solution of an embodiment of the present disclosure, the crystallinity of the calcined product is higher and has better cycling stability.

Furthermore, in some embodiments, the carbon source is at least one of glucose, PEG-2000, and sucrose, and the fluorine source and sodium source are sodium fluoride.

In the technical solution of an embodiment of the present disclosure, no other impurities will be introduced, and the carbon coating effect is good.

In a third aspect, an embodiment of the present disclosure provides a cathode sheet comprising the carbon-coated sodium vanadium fluorophosphate cathode material of the first aspect of the present disclosure or the carbon-coated sodium vanadium fluorophosphate prepared by the preparation method of the second aspect of the present disclosure.

In a fourth aspect, an embodiment of the present disclosure provides a secondary battery comprising the cathode sheet of the third aspect of the present disclosure.

The following are some specific embodiments. It should be noted that the embodiments described below are exemplary and are intended to explain the present disclosure and are not to be construed as limiting the present disclosure. If specific technology or conditions are not specified in the embodiments, follow the technology or conditions described in the documents in the art or follow the product manual. The reagents or instruments used without specifying the manufacturer are conventional products that can be obtained through commercial purchase.

### I. Preparation method

### Embodiment 1

An embodiment of the carbon-coated sodium vanadium fluorophosphate cathode material in the present disclosure, the preparation method of the carbon-coated sodium vanadium fluorophosphate cathode material in the present embodiment was as follows:
(1) 0.1 mol vanadium pentoxide and 0.3 mol oxalic acid were added to 500 mL of deionized water, heated at 80 °C, stirred for 1 h until completely dissolved, then 0.2 mol ammonium dihydrogen phosphate was added, and stirred for 3 h to react under stirring conditions to obtain a mixed material;
(2) The mixed material was evaporated to dryness at 120 °C to obtain a vanadium phosphate precursor;
(3) The vanadium phosphate precursor was calcined in an inert atmosphere, with a calcination temperature of 750 °C and a calcination time of 8 h, and after calcination, it was naturally cooled to room temperature to obtain a vanadium phosphate crystal;
(4) 0.04 mol vanadium phosphate crystal, 0.06 mol sodium fluoride, 0.00382 mol glucose were added into a ball milling tank, and 10 mL of anhydrous ethanol was added, and performed ball milling at a rate of 400 r/min for 20 h to obtain a carbon-coated sodium vanadium fluorophosphate precursor;
(5) The carbon-coated sodium vanadium fluorophosphate precursor was calcined in an inert atmosphere, with a calcination temperature of 750 °C and a calcination time of 2 h, and after calcination, it was naturally cooled to room temperature and crushed by airflow to obtain a carbon-coated sodium vanadium fluorophosphate cathode material.

### Embodiment 2

An embodiment of the carbon-coated sodium vanadium fluorophosphate cathode material in the present disclosure, the preparation method of the carbon-coated sodium vanadium fluorophosphate cathode material in the present embodiment was as follows:
(1) 0.2 mol ammonium metavanadate and 0.6 mol citric acid were added to 500 mL of deionized water, heated at 80 °C, stirred for 1 h until completely dissolved, then 0.2 mol diammonium hydrogen phosphate was added, and stirred for 3 h to react under stirring conditions to obtain a mixed material;
(2) The mixed material was evaporated to dryness at 120 °C to obtain a vanadium phosphate precursor;
(3) The vanadium phosphate precursor was calcined in an inert atmosphere, with a calcination temperature of 750 °C and a calcination time of 8 h, and after calcination, it was naturally cooled to room temperature to obtain a vanadium phosphate crystal;
(4) 0.04 mol vanadium phosphate crystal, 0.056 mol sodium fluoride, 0.00408 mol glucose were added into a ball milling tank, and 10 mL of anhydrous ethanol was added, and performed ball milling at a rate of 400 r/min for 5 h to obtain a carbon-coated sodium vanadium fluorophosphate precursor; and
(5) The carbon-coated sodium vanadium fluorophosphate precursor was calcined in an inert atmosphere, with a calcination temperature of 750 °C and a calcination time of 2 h, and after calcination, it was naturally cooled to room temperature and crushed by airflow to obtain a carbon-coated sodium vanadium fluorophosphate cathode material.

### Embodiment 3

An embodiment of the carbon-coated sodium vanadium fluorophosphate cathode material in the present disclosure, the preparation method of the carbon-coated sodium vanadium fluorophosphate cathode material in the present embodiment was as follows:
(1) 0.1 mol vanadium pentoxide and 0.3 mol oxalic acid were added to 500 mL of deionized water, heated at 80 °C, stirred for 1 h until completely dissolved, then 0.2 mol phosphoric acid was added, and stirred for 3 h to react under stirring conditions to obtain a mixed material;
(2) The mixed material was evaporated to dryness at 120 °C to obtain a vanadium phosphate precursor;
(3) The vanadium phosphate precursor was calcined in an inert atmosphere, with a calcination temperature of 750 °C and a calcination time of 8 h, and after calcination, it was naturally cooled to room temperature to obtain a vanadium phosphate crystal;
(4) 0.04 mol vanadium phosphate crystal, 0.064 mol sodium fluoride, 0.00378 mol glucose were added into a ball milling tank, and 10 mL of anhydrous ethanol was added, and performed ball milling at a rate of 400 r/min for 24 h to obtain a carbon-coated sodium vanadium fluorophosphate precursor; and
(5) The carbon-coated sodium vanadium fluorophosphate precursor was calcined in an inert atmosphere, with a calcination temperature of 750 °C and a calcination time of 2 h, and after calcination, it was naturally cooled to room temperature and crushed by airflow to obtain a carbon-coated sodium vanadium fluorophosphate cathode material.

### Embodiment 4

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (4), the amount of glucose added was 0.00353 mol.

### Embodiment 5

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (4), the amount of glucose added was 0.00429 mol.

### Embodiment 6

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (4), the amount of sodium fluoride added was 0.04 mol.

### Embodiment 7

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (5), the calcination temperature was 600 °C and the calcination time was 3 h.

### Embodiment 8

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (5), the calcination temperature was 800 °C and the calcination time was 0.5 h.

### Embodiment 9

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (5), the calcination temperature was 600 °C and the calcination time was 1 h.

### Embodiment 10

An embodiment of the carbon-coated sodium vanadium fluorophosphate cathode material in the present disclosure, the only difference between the preparation method of the carbon-coated sodium vanadium fluorophosphate cathode material in the present embodiment and Embodiment 1 was that in step (5), the calcination temperature was 800 °C and the calcination time was 4 h.

### Comparative Embodiment 1

A carbon-coated sodium vanadium fluorophosphate cathode material, the only difference between its preparation method and Embodiment 1 was that in step (4), the amount of glucose added was 0.007 mol.

### Comparative Embodiment 2

A sodium vanadium fluorophosphate cathode material, the only difference between its preparation method and Embodiment 1 was that glucose was not added in step (4).

### Comparative Embodiment 3

A carbon-coated sodium vanadium fluorophosphate cathode material, the only difference between its preparation method and Embodiment 1 was the timing of glucose addition. In step (3), a vanadium phosphate precursor and glucose were mixed, and calcined at 750 °C for 8 h to obtain a carbon-coated vanadium phosphate crystal; and glucose was not added in step (4).

### II. Testing method

### 1. Testing of vanadium phosphate crystal property

Crystal structure: the D8 Focus X-ray powder diffractometer from Bruker, Germany was used for testing, with Cu-Kα as the radiation source and a wavelength of 1.5046 λ; using Ni optical filter, the tube current was 40 mA, the tube pressure was 40 KV, the scanning range was 5°-90°, the scanning speed was 5°/min, and the step size was 0.05°. The material was placed into a glass slide and flatten it, the glass slide was inserted into the center of the instrument's experimental slot for testing; and the phase identification and crystal structure information were analyzed using JADE 6.0 software.

### 2. Testing of carbon-coated sodium vanadium fluorophosphate cathode material and sodium vanadium fluorophosphate cathode material property

Morphology: the SU-3500 scanning electron microscope tester produced by HITACHI company was used for appearance testing, with an acceleration voltage of 15 KV.
Mass fraction of carbon element: infrared C/S analyzer;
D50 particle size: tested using a Malvern Mastersizer laser particle size analyzer;
BET specific surface area: tested using the TriStarII3030 plus specific surface area analyzer from Micromeritics in the United States;
Compacted density: compacting under a pressure of 3.0 T for 30 seconds, and testing using a compaction density meter.

### 3. Testing of battery property

Battery assembly: the cathode materials in the embodiments and comparative embodiments were respectively used as the cathode active materials for sodium ion batteries. The cathode active material was mixed with a binder polyvinylidene fluoride (PVDF) and a conductive agent, conductive carbon black (Super P), in a mass ratio of 7:2:1. Then, dimethyl pyrrolidone (NMP) was added as a solvent, mixed and stirred to form uniform slurry. The slurry was evenly coated on an aluminum foil, dried, and cut into thin sheets as the cathode. Metal sodium was used as the anode, and a glass fiber membrane was used as the separator. The solvent in the electrolyte was a mixed solvent of vinyl carbonate, polycarbonate, and fluoroethylene carbonate in a volume ratio of 0.45:045:0.05. The solute was NaClO₄, with a concentration of 1.0 mol/L. The CR2032 button battery was assembled in an argon glove box.

Electrochemical performance testing: the assembled button battery was tested using the Land battery tester produced by Wuhan Jinnuo Electronics Co., Ltd. The testing conditions were as follows:
Specific discharge capacity and cycling performance: constant current charge and discharge tests were performed under 0.5 C conditions, with a charge and discharge voltage range of 2 V-4.3 V.

Rate performance: rate performance tests were performed sequentially under conditions of 0.1 C, 0.2 C, 0.5 C, 1 C, 2 C, 5 C, and 10 C, with a charge and discharge voltage range of 2 V-4.3 V.

### III. Analysis of test results for various embodiments and comparative embodiments

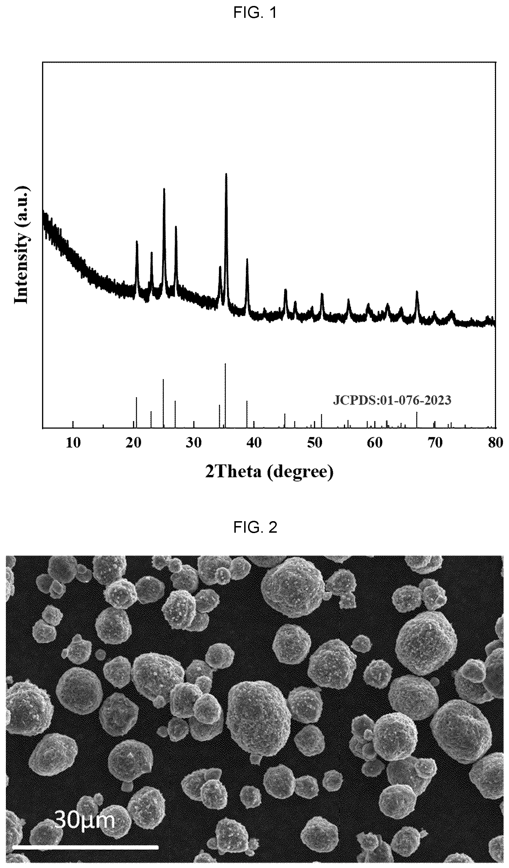

FIG. 1 was an XRD pattern diagram of a vanadium phosphate crystal in Embodiment 1. It could be seen from the figure that the diffraction peak positions of the vanadium phosphate crystal correspond to the diffraction peak positions of the vanadium phosphate in the orthogonal crystal form on the standard card (JCPDS: 01-076-2023), indicating that the vanadium phosphate crystal in Embodiment 1 was a crystal in the orthogonal crystal form.

Table 1 showed the performance test results of the cathode materials in the embodiments and comparative embodiments.

**Table 1**

| | Mass fraction of carbon element (%) | D50 particle size (µm) | BET specific surface area (m²/g) | Compacted density (g/cm³) |
|---|---|---|---|---|
| Embodiment 1 | 2.5 | 5 | 15 | 2.06 |
| Embodiment 2 | 2.4 | 4.9 | 18.4 | 1.88 |
| Embodiment 3 | 2.8 | 4.5 | 17 | 2.08 |
| Embodiment 4 | 1.8 | 4 | 10 | 2.1 |
| Embodiment 5 | 3 | 5.7 | 19 | 1.96 |
| Embodiment 6 | 2.65 | 5 | 14.6 | 1.9 |
| Embodiment 7 | 2.55 | 5 | 14.8 | 1.86 |
| Embodiment 8 | 2.75 | 5 | 15.2 | 2.07 |
| Embodiment 9 | 3.5 | 5 | 22 | 1.8 |
| Embodiment 10 | 2.0 | 5 | 9.2 | 2.07 |
| Comparative Embodiment 1 | 4 | 6 | 20.1 | 1.8 |
| Comparative Embodiment 2 | / | 4.4 | 4 | 2.2 |
| Comparative Embodiment 3 | 1.5 | 4.8 | 8 | 1.7 |

FIG. 2 was a scanning electron microscope image of a carbon-coated sodium vanadium fluorophosphate cathode material in Embodiment 1. It could be seen from the figure that its structure was spherical or quasi spherical.

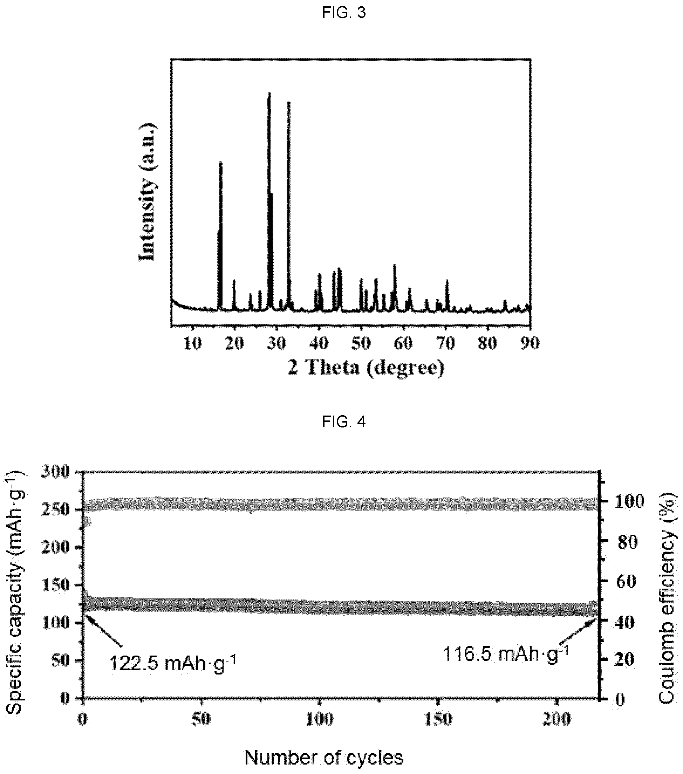

FIG. 3 was an XRD pattern diagram of a carbon-coated sodium vanadium fluorophosphate cathode material in Embodiment 1. There were no impurity peaks in the XRD pattern diagram, and it was the pure phase of the sodium vanadium fluorophosphate, indicating that the purity of the core layer material of the carbon-coated sodium vanadium fluorophosphate cathode material prepared by the method disclosed in the present disclosure was high.

Table 2 showed the performance test results of the battery, wherein the specific charge capacity and the specific discharge capacity were tested under 0.5 C conditions.

**Table 2**

| | Initial specific discharge capacity (mAh·g⁻¹) | Specific discharge capacity after 200 cycles (mAh·g⁻¹) | Capacity retention rate after 200 cycles (%) |
|---|---|---|---|
| Embodiment 1 | 122.5 | 116.5 | 95.1 |
| Embodiment 2 | 120.4 | 114.6 | 95.2 |
| Embodiment 3 | 118 | 106.5 | 90.2 |
| Embodiment 4 | 116.3 | 104.3 | 89.7 |
| Embodiment 5 | 119.3 | 105.1 | 88.1 |
| Embodiment 6 | 111 | 102.7 | 92.5 |
| Embodiment 7 | 121 | 113 | 93.3 |
| Embodiment 8 | 121.3 | 114.6 | 94.4 |
| Embodiment 9 | 109 | 99.7 | 91.4 |
| Embodiment 10 | 108.4 | 99 | 91.3 |
| Comparative Embodiment 1 | 108 | 95 | 88.0 |
| Comparative Embodiment 2 | 80 | 65 | 81.25 |
| Comparative Embodiment 3 | 102 | 88 | 86.3 |

According to Table 2, the initial specific discharge capacity of the carbon-coated sodium vanadium fluorophosphate cathode materials obtained in Embodiments 1-10 was higher than 105 mAh·g⁻¹, and the specific discharge capacity after 200 cycles was above 99 mAh·g⁻¹. The capacity retention rate after 200 cycles was higher than 88%, indicating that the energy density of the carbon-coated sodium vanadium fluorophosphate cathode material was high and it had good cycling stability. The excessive carbon coating of the cathode material in Comparative Embodiment 1 affected the ion migration rate and reduced its specific discharge capacity; the cathode material in Comparative Embodiment 2 had no carbon coating layer, poor electronic conductivity, and even worse electrochemical performance; and the carbon element of the cathode material in Comparative Embodiment 3 was added during the preparation of vanadium phosphate, which had a relatively low compacted density, making the resulting battery had relatively poor specific capacity and cycling performance.

In addition, according to the test results of Embodiments 1-5, it could be seen that when the mass fraction of the carbon element in the carbon-coated sodium vanadium fluorophosphate cathode material was 2.4%-2.8%, its specific discharge capacity and cycling performance were better.

According to the test results of Embodiments 1-3 and 6, it could be seen that the electrochemical performance was significantly better when a molar ratio of vanadium phosphate crystal, fluorine element, sodium element, and carbon element was 1: (1.4-1.6): (1.4-1.6): (0.55-0.65).

According to the performance test results of Embodiments 1 and 7-10, it could be seen that the electrochemical performance of the resulting battery was better when the BET specific surface area of the carbon-coated sodium vanadium fluorophosphate cathode material was 14 m²/g-18.5 m²/g.

FIG. 4 was a cycling performance test diagram of a battery made from a carbon-coated sodium vanadium fluorophosphate cathode material in Embodiment 1 under 0.5 C conditions, which was consistent with Table 2, showing the battery had good specific capacity and cycling stability.

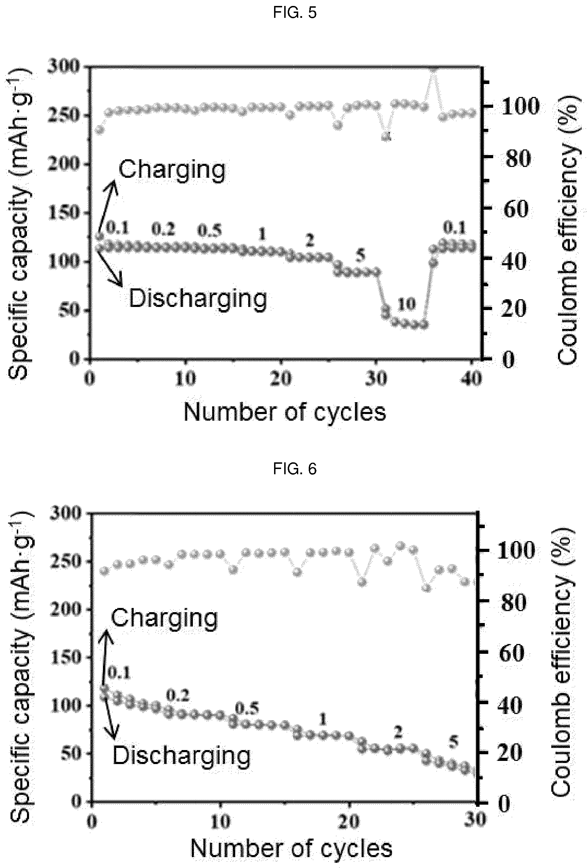

FIGs. 5-6 were the rate performance test diagrams of secondary batteries using a carbon-coated sodium vanadium fluorophosphate as a cathode active material in Embodiment 1 and sodium vanadium fluorophosphate as a cathode active material in Comparative Embodiment 2, respectively. It could be seen from the figures that the secondary battery made from the carbon-coated sodium vanadium fluorophosphate cathode material in Embodiment 1 had good rate performance, and still had a high specific discharge capacity when the rate was increased to 5 C; in addition, when the rate was increased to 10 C and then reduced to 0.1 C, the specific discharge capacity was almost the same as the initial specific discharge capacity. This result indicated that the carbon-coated sodium vanadium fluorophosphate cathode material prepared by the present disclosure had good stability.

It should be noted that the present disclosure is not limited to the above-mentioned embodiments. The above-mentioned embodiments are merely embodiments, and embodiments having substantially the same constructions and the same effects as the technical idea within the scope of the technical solutions of the present disclosure are all included in the technical scope of the present disclosure. In addition, without departing from the essence of the present disclosure, various modifications made to the embodiments that can be conceived by those skilled in the art, and other manners constructed by combining some of the constituent elements in the embodiments are also included in the scope of the present disclosure.

## Claims

1. A carbon-coated sodium vanadium fluorophosphate cathode material, wherein the carbon-coated sodium vanadium fluorophosphate cathode material comprises a core layer and a shell layer, the core layer material comprises sodium vanadium fluorophosphate, the shell layer material comprises carbon, the mass fraction of carbon element in the carbon-coated sodium vanadium fluorophosphate cathode material is 1.8%-3%, the D50 particle size is 3 µm-10 µm, and the compacted density is 1.8 g/cm³-2.1 g/cm³.

2. The carbon-coated sodium vanadium fluorophosphate cathode material according to claim 1, wherein the mass fraction of the carbon element in the carbon-coated sodium vanadium fluorophosphate cathode material is 2.4%-2.8%.

3. The carbon-coated sodium vanadium fluorophosphate cathode material according to claim 1, wherein the BET specific surface area of the carbon-coated sodium vanadium fluorophosphate cathode material is 14 m²/g-18.5 m²/g.

4. The carbon-coated sodium vanadium fluorophosphate cathode material according to any one of claims 1-3, wherein the chemical formula of the sodium vanadium fluorophosphate is Na₃V₂(PO₄)₂F₃.

5. A preparation method of the carbon-coated sodium vanadium fluorophosphate cathode material, wherein the preparation method comprises the following steps:
preparing a carbon-coated sodium vanadium fluorophosphate precursor using a vanadium phosphate crystal, a fluorine source, a sodium source, and a carbon source;
calcining the carbon-coated sodium vanadium fluorophosphate precursor to obtain the carbon-coated sodium vanadium fluorophosphate cathode material; and
wherein, the carbon-coated sodium vanadium fluorophosphate cathode material comprises a core layer and a shell layer, the core layer material comprises sodium vanadium fluorophosphate, the shell layer material comprises carbon, the mass fraction of carbon element in the carbon-coated sodium vanadium fluorophosphate cathode material is 1.8%-3%, the D50 particle size is 3 µm-10 µm, and the compacted density is 1.8 g/cm³-2.1 g/cm³.

6. The preparation method of the carbon-coated sodium vanadium fluorophosphate cathode material according to claim 5, wherein the crystal form of the vanadium phosphate crystal is orthogonal crystal form.

7. The preparation method of the carbon-coated sodium vanadium fluorophosphate cathode material according to claim 6, wherein a molar ratio of vanadium phosphate, fluorine element, sodium element, and carbon element in the vanadium phosphate crystal, fluorine source, sodium source, and carbon source is 1: (1.4-1.6): (1.4-1.6): (0.55-0.65).

8. The preparation method of the carbon-coated sodium vanadium fluorophosphate cathode material according to claim 5, wherein the step of preparing the carbon-coated sodium vanadium fluorophosphate precursor using the vanadium phosphate crystal, the fluorine source, the sodium source, and the carbon source comprises: mixing the vanadium phosphate crystal, the fluorine source, the sodium source, and the carbon source, and performing ball milling for 5 h-24 h to obtain the carbon-coated sodium vanadium fluorophosphate precursor; and/or
in the step of calcining the carbon-coated sodium vanadium fluorophosphate precursor, a calcination temperature is 600 °C-800 °C, and a calcination time is 0.5 h-5 h; and/or
a preparation method of the vanadium phosphate crystal comprises the following steps:
mixing a vanadium source, a reducing agent, water, and a phosphorus source, and conducting a reaction by heating to obtain a mixed material;
drying the mixed material to obtain a vanadium phosphate precursor; and
calcining the vanadium phosphate precursor to obtain a vanadium phosphate crystal.

9. A cathode sheet, wherein the cathode sheet comprises a current collector and a cathode active material, a conductive agent, and a binder located on one side or both sides of the current collector; the cathode active material comprises the carbon-coated sodium vanadium fluorophosphate cathode material according to any one of claims 1-4, or the carbon-coated sodium vanadium fluorophosphate cathode material prepared by the preparation method of the carbon-coated sodium vanadium fluorophosphate cathode material according to any one of claims 5-8.

10. A secondary battery, wherein the secondary battery comprises a cathode sheet, an anode sheet, and a separator, wherein the cathode sheet is the cathode sheet according to claim 9.
